# EUROPEAN PATENT APPLICATION

(11) **EP 3 817 284 A1**
(43) Date of publication of application: **05.05.2021**
(21) Application number: 19206571.2
(22) Date of filing: 31.10.2019
(51) Int. Cl.: H04L 12/24, H04L 12/26

(54) **METHODS AND APPARATUS TO REQUEST AND PROVIDE NETWORK ANALYTIC DATA**

(71) Applicant: NTT DoCoMo, Inc., Tokyo 100-6150 (JP)
(72) Inventor: SAMA, Malla Reddy, 80687 Munich (DE); THAKOLSRI, Srisakul, 80687 Munich (DE); GUERZONI, Riccardo, 80687 Munich (DE)
(74) Representative: Viering, Jentschura & Partner mbB Patent- und Rechtsanwälte

(57) **Abstract**

A network function for requesting network analytics, comprising: a transmitter configured to transmit a request for data analytics information to a network function for providing network analytics wherein the request for data analytics information comprises the identification of a further network function and an indicator of the data analytics about the further network function requested; a receiver configured to receive a response to the request for data analytics from the receiving network function, wherein the response to the request for data analytics from the network function for providing network analytics comprise the data analytics about the further network function or a rejection; wherein the request is for data analytics information is an inquiry for data analytics information and the response is a reply or the request is a subscription for data analytics information and the response comprises one or more notifications.

## Description

### Technical Field

Various aspects of this disclosure relate generally to requesting and providing network analytic data.

### Summary

Communication networks provide functionalities such as virtual networks and slices that are designed to provide a desired level of service quality. In order to achieve such level of service, network functions within a communication network may need to be able to share information such as load and/or available network bandwidth of slices or network function within the communication network as well as across communication networks. More generally, network functions may need to share network analytic data which may include statistic and predictive data about the communication network and about how load may be distributed across the network at a given time.

To this extent, communication networks may employ special network functions, such as the Network Data Analytics Function (NWDAF), that may provide an initial support for information the collection of network load and other quality of service indicators within a single communication network, and sometime only within a single segment of the communication network, but they fail to provide any support across different communication networks managed by different organizations and operators, and even across segments of the same communication network.

Accordingly, in order to provide the expected levels of service across communication networks, approaches are required which allow sharing of network analytics information across network boundaries and/or across administrative domains within network boundaries would be desirables. Such approaches would enable network operators or other third-party entities to monitor the whole communication channel from the service providers to the service consumers.

Various embodiments provide a communication terminal. The invention is defined by the appended claims.

A network function for requesting network analytics, comprising: a transmitter configured to transmit a request for data analytics information to a network function for providing network analytics wherein the request for data analytics information comprises the identification of a further network function and an indicator of the data analytics about the further network function requested; a receiver configured to receive a response to the request for data analytics from the receiving network function, wherein the response to the request for data analytics from the network function for providing network analytics comprise the data analytics about the further network function or a rejection; wherein the request is for data analytics information is an inquiry for data analytics information and the response is a reply or the request is a subscription for data analytics information and the response comprises one or more notifications. The features mentioned in this paragraph provide a firth example.

By way of the example, the request for data analytics information further comprises a Single Network Slice Selection Identifier (S-NSSAI) and/or Network Function (NF) details of the further network function, and the response to the request for data analytics further comprises slice load value of the slice indicated by the Single Network Slice Selection Identifier and/or NF load of the network function indicated by the network function details. The features mentioned in this paragraph in combination with the first example provide a second example.

By way of the example, the request for data analytics information further comprises authorization information. The features mentioned in this paragraph in combination with the features of the first or second example provide a third example.

By way of the example, at least one of the network function for requesting network analytics and the network function for providing network analytics is a Network Data Analytics Function and/or a component of NWDAF and/or one or more NWDAF Service(s). The features mentioned in this paragraph in combination with the features of any one of the first to third examples provide a fourth example.

By way of the example, the receiver is further configured to receive from an originating network function a request for data analytics information wherein the request for data analytics information comprises the identification of the further network function and an indicator of the data analytics about the further network function requested; the transmitter is further configured to transmit the request for data analytics to the network function for providing network analytics further indicates the originating network function. The features mentioned in this paragraph in combination with the features of any one of the first to fourth examples provide a fifth example.

By way of the example, a store configured to store data analytics related at least to the originating network function; a processor configured to process of data analytics related at least to the originating network function retrieved from the store; a transmitter configured to transmit a response to the request for data analytics from the originating network function to the originating network function, wherein the response to the request for data analytics comprises the data analytics about the originating network function retrieve by the processor or a rejection. The features mentioned in this paragraph in combination with the features of the fifth example provide a sixth example.

By way of example, a discovery processor further configured to configure the transmitter to transmit to a Network Repository Function and/or Service Communication Proxy a discovery a request for a receiving network function, and configure the receiver to receive a response from the Network Repository Function and/or Service Communication Proxy wherein the response from the Network Repository Function and/or Service Communication Proxy comprises an indication of the receiving network function. The features mentioned in this paragraph in combination with the features of any one of the first to sixth examples provide a seventh example.

By way of the example, the transmitter is further configured to transmit requests through a first network to the network function for providing network analytics in a second network; wherein the first network and the second network are different networks. The features mentioned in this paragraph in combination with the features of any one of the first to seventh examples provide an eighth example.

By way of the example, the first network is either a Public Land Mobile Network and/or a Non-Public Network and/or administrative domain of a network and the second network is either a Public Land Mobile Network and/or a Non-Public Network and/or administrative domain of a network. The features mentioned in this paragraph in combination with the features of the eighth example provide a ninth example.

By way of the example, the first network is Home Public Land Mobile Network and the second network is a Visiting Public Land Mobile Network or the first network is Visiting Public Land Mobile Network and the second network is a Home Public Land Mobile Network or the first network is Visiting Public Land Mobile Network and the second network is a Visiting Public Land Mobile Network. The features mentioned in this paragraph in combination with the features of the eighth or ninth example provide a tenth example.

A network function for providing network analytics comprising :a receiver configured to receive a request for data analytics or a subscription for data analytics information from a network function for requesting network analytics requesting network function wherein the request for data analytics information comprises the identification of a further network function and an indicator of the data analytics about the further network function requested; a store configured to store data analytics related at least to the further network function; a processor configured to process data analytics related to at least the further network function retrieved from the store; a transmitter configured to transmit a response to the request for data analytics from the data analytics information from a network function to the data analytics information from a network function, wherein the response to the request for data analytics comprises the data analytics about the further network function retrieve by the processor or a rejection; wherein the request is for data analytics information is an inquiry for data analytics information and the response is a reply or the request is a subscription for data analytics information and the response comprises one or more notifications. The features mentioned in this paragraph provide an eleventh example.

By way of the example, the request for data analytics information further comprises a Single Network Slice Selection Identifier and/or network function details of the further network function, and the response to the request for data analytics further comprises slice load value of the slice indicated by the Single Network Slice Selection Identifier and/or NF load of the network function indicated by the network function details. The features mentioned in this paragraph in combination with the features of the eleventh example provide a twelfth example.

By way of the example, the request for data analytics information further comprises authorization information; wherein the processor is further configured to verify the authorization information, and to stop the retrieval from the store of data analytics related to the further network function if the verification of the authorization information fails; wherein the transmitter is further configured to transmit a rejection if the verification of the authorization information fails. The features mentioned in this paragraph in combination with the features of the eleventh or twelfth example provide a thirteenth example.

By way of the example, at least one of the network function for requesting network analytics and the network function for providing network analytics is a Network Data Analytics Function. The features mentioned in this paragraph in combination with the features of any one of the eleventh to thirteenth examples provide a fourteenth example.

By way of the example, the receiver is further configured to receive a request for data analytics from the network function for requesting network analytics indicating an originating network function; the transmitter is further configured to transmit a response to the request for data analytics from the data analytics information from a network function to the data analytics information from a network function, wherein the response to the request for data analytics comprises the data analytics about the further network function retrieve by the processor or a rejection and the transmitter is further configured to transmit a response to the request for data analytics from the data analytics information from a network function to the originating network function, wherein the response to the request for data analytics comprises the data analytics about the further network function retrieve by the processor or a rejection. The features mentioned in this paragraph in combination with the features of any one of the eleventh to fourteenth examples provide a fifteenth example.

By way of the example, the transmitter is further configured to transmit a data collection request to an Operations, Administration and Maintenance (OAM) system and/or a status subscribe to a Network Repository Function, and the receiver is further configured to receive a data collection request from an Operations, Administration and Maintenance system and/or a status subscribe from a Network Repository Function. The features mentioned in this paragraph in combination with the features of any one of the eleventh to fifteenth examples provide a sixteenth example.

By way of the example, the transmitter is further configured to transmit responses through a first network to a network function for requesting network analytics in a second network; wherein the first network and the second network are different networks. The features mentioned in this paragraph in combination with the features of any one of the eleventh to sixteenth examples provide a seventeenth example.

By way of the example, the first network is either a Public Land Mobile Network and/or a Non-Public Network and/or administrative domain of a network and the second network is either a Public Land Mobile Network and/or a Non-Public Network and/or administrative domain of a network. The features mentioned in this paragraph in combination with the features of the seventeenth example provide an eighteenth example.

By way of example, the first network is Home Public Land Mobile Network and the second network is a Visiting Public Land Mobile Network or the first network is Visiting Public Land Mobile Network and the second network is a Home Public Land Mobile Network or the first network is Visiting Public Land Mobile Network and the second network is a Visiting Public Land Mobile Network. The features mentioned in this paragraph in combination with the features of the seventeenth or eighteenth example provide a nineteenth example.

A method for requesting network analytics comprising: transmitting a request for data analytics information to a network function for providing network analytics wherein the request for data analytics information comprises the identification of a further network function and an indicator of the data analytics about the further network function requested; receiving a response to the request for data analytics from the receiving network function, wherein the response to the request for data analytics from the network function for providing network analytics comprises the data analytics about the further network function or a rejection; wherein the request is for data analytics information is an inquiry for data analytics information and the response is a reply or the request is a subscription for data analytics information and the response comprises one or more notifications. The features mentioned in this paragraph provide a twentieth example.

By way of the example, the request for data analytics information further comprises a Single Network Slice Selection Identifier and/or network function details of the further network function, and the response to the request for data analytics further comprises slice load value of the slice indicated by the Single Network Slice Selection Identifier and/or NF load of the network function indicated by the network function details. The features mentioned in this paragraph in combination with the features of the twentieth example provide a twenty-first example.

By way of example, the request for data analytics information further comprises authorization information. The features mentioned in this paragraph in combination with the features of the twentieth or twentieth-first example provide a twenty-second example.

By way of the example, the network function for providing network analytics is a Network Data Analytics Function. The features mentioned in this paragraph in combination with the features of any one of the twentieth to twentieth second example provide a twenty-third example.

By way of the example, receiving further comprises receiving from an originating network function a request for data analytics information wherein the request for data analytics information comprises the identification of the further network function and an indicator of the data analytics about the further network function requested; and transmitting the request for data analytics to the network function for providing network analytics further indicates the originating network function. The features mentioned in this paragraph in combination with the features of any one of the twentieth to twentieth-third example provide a twenty-fourth example.

By way of the example, storing data analytics related at least to the originating network function; processing data analytics related at least to the originating network function retrieved from the store; transmitting a response to the request for data analytics from the originating network function to the originating network function, wherein the response to the request for data analytics comprises the data analytics about the originating network function retrieve by the processor or a rejection. The features mentioned in this paragraph in combination with the features twentieth-fourth example provide a twenty-fifth example.

By way of the example, a discovery process comprising transmitting to a Network Repository Function a discovery a request for a receiving network function, and receiving a response from the Network Repository Function wherein the response from the Network Repository Function comprises an indication of the receiving network function. The features mentioned in this paragraph in combination with the features of any one of the twentieth to twentieth-fifth examples provide a twenty-sixth example.

By way of the example, transmitting requests through a first network to a network function for providing network analytics in a second network; wherein the first network and the second network are different networks. The features mentioned in this paragraph in combination with the features of any one of the twentieth to twentieth-sixth examples provide a twenty-seventh example.

By way of the example, the first network is either a Public Land Mobile Network and/or a Non-Public Network and/or administrative domain of a network and the second network is either a Public Land Mobile Network and/or a Non-Public Network and/or administrative domain of a network. The features mentioned in this paragraph in combination with the features of the twentieth-seventh examples provide a twenty-eighth example.

By way of the example, the first network is Home Public Land Mobile Network and the second network is a Visiting Public Land Mobile Network or the first network is Visiting Public Land Mobile Network and the second network is a Home Public Land Mobile Network or the first network is Visiting Public Land Mobile Network and the second network is a Visiting Public Land Mobile Network. The features mentioned in this paragraph in combination with the features of the twentieth-seventh or the twentieth-eighth example provide a twenty-ninth example.

A method for providing network analytics comprising: receiving a request for data analytics from a data analytics information from a network function requesting network function wherein the request for data analytics information comprises the identification of a further network function and an indicator of the data analytics about the further network function requested; storing data analytics related at least to the further network function; processing data analytics related to at least the further network function retrieved from the store; transmitting a response to the request for data analytics from the data analytics information from a network function to the data analytics information from a network function, wherein the response to the request for data analytics comprises the data analytics about the further network function retrieve by the processor or a rejection; wherein the request is for data analytics information is an inquiry for data analytics information and the response is a reply or the request is a subscription for data analytics information and the response comprises one or more notifications. The features mentioned in this paragraph provide a thirtieth example.

By way of the example, the request for data analytics information further comprises a Single Network Slice Selection Identifier and/or network function details of the further network function, and the response to the request for data analytics further comprises slice load value of the slice indicated by the Single Network Slice Selection Identifier and/or NF load of the network function indicated by the network function details. The features mentioned in this paragraph in combination with the features of the thirtieth example provide a thirtieth-first example.

By way of the example, the request for data analytics information further comprises authorization information; wherein processing further comprises verifying the authorization information, and stopping the retrieval from the store of data analytics related to the further network function if the verification of the authorization information fails; transmitting is further comprises transmitting a rejection if the verification of the authorization information fails. The features mentioned in this paragraph in combination with the features of the thirtieth or thirtieth-first example provide a thirtieth-second example.

By way of the example, the network function for requesting network analytics is a Network Data Analytics Function. The features mentioned in this paragraph in combination with the features of any one of the thirtieth to thirtieth-second example provide a thirtieth-third example.

By way of the example, that receiving further comprises receiving a request for data analytics from the network function for requesting network analytics indicating an originating network function; transmitting further comprises transmitting a response to the request for data analytics from the data analytics information from a network function to the data analytics information from a network function, wherein the response to the request for data analytics comprises the data analytics about the further network function retrieve by the processor or a rejection and transmitting further comprises transmitting a response to the request for data analytics from the data analytics information from a network function to the originating network function, wherein the response to the request for data analytics comprises the data analytics about the further network function retrieve by the processor or a rejection. The features mentioned in this paragraph in combination with the features of any one of the thirtieth to thirtieth-third example provide a thirtieth-fourth example.

By way of the example, that transmitting further comprises transmitting a data collection request to an Operations, Administration and Maintenance system and a status subscribe to a Network Repository Function, and receiving further comprises to receive a data collection request from an Operations, Administration and Maintenance system and a status subscribe from a Network Repository Function. The features mentioned in this paragraph in combination with the features of the thirtieth-fourth example provide a thirtieth-fifth example.

By way of the example, that transmitting further comprises transmitting responses through a first network to a network function for requesting network analytics in a second network; wherein the first network and the second network are different networks. The features mentioned in this paragraph in combination with the features of any one of the thirtieth to thirtieth-fifth example provide a thirtieth-sixth example.

By way of the example, that the first network is either a Public Land Mobile Network and/or a Non-Public Network and/or administrative domain of a network and the second network is either a Public Land Mobile Network and/or a Non-Public Network and/or administrative domain of a network. The features mentioned in this paragraph in combination with the features of the thirtieth-sixth example provide a thirtieth-seventh example.

By way of the example, that the first network is Home Public Land Mobile Network and the second network is a Visiting Public Land Mobile Network or the first network is Visiting Public Land Mobile Network and the second network is a Home Public Land Mobile Network. The features mentioned in this paragraph in combination with the features of the thirtieth-sixth or thirtieth-seventh example provide a thirtieth-eighth example.

### Brief Description of the Drawings

In the drawings, like reference characters generally refer to the same parts throughout the different views. The drawings are not necessarily to scale; emphasis is instead generally being placed upon illustrating the principles of the disclosure. In the following description, various embodiments of the disclosure are described with reference to the following drawings, in which:
FIG. 1 shows an exemplary provisioning of a service to a device across networks boundaries.
FIG. 2 shows an exemplary scenario with multiple communication networks.
FIG. 3 shows exemplary embodiments of basic patterns of interaction between any Network Functions with regard to network analytics.
FIG. 4 shows an exemplary embodiment of network analytics synchronization between NWDAFs across PLMN boundaries.
FIG. 5 shows an exemplary embodiment of network analytics synchronization between NWDAFs across PLMN boundaries.
FIG. 6 shows an exemplary process to discover NWDAFs within a network or across network boundaries.
FIG. 7 shows an embodiment in which a NF in the VLPLM may discover and inquiry a NWDAF in the HPLMN.
FIG. 8 shows an embodiment in which a NF in the HLPLM may discover and inquiry a NWDAF in the VPLMN.
FIG. 9 shows an embodiment in which a NWDAF in the HLPLM may discover and inquiry a NWDAF in the VPLMN.
FIG. 10 shows an embodiment in which a NF in the VPLMN may inquiry a NWDAF in the VPLMN which in turn may discover and inquiry a NWDAF in the HPLMN.
FIG. 11 shows a network embodiment which shows an example interaction provided between NWDAFs across NPNs and PLMNs.
FIG. 12 shows a further refinement of the embodiment in FIG. 11 in which a network function NF may cross the network boundaries without the mediation of any NWDAF.
FIG. 13 shows embodiments which involve the Network Exposure Function (NEF).
FIG. 14 shows an embodiment of a service network function for requesting network analytics, and a network function for providing network analytics.
FIG. 15 shows an exemplary method for requesting network analytics.
FIG. 16 shows an exemplary method for providing network analytics.

The following detailed description refers to the accompanying drawings that show, by way of illustration, specific details and embodiments in which the disclosure may be practiced. Other aspects may be utilized and structural, logical, and electrical changes may be made without departing from the scope of the disclosure. The various aspects of this disclosure are not necessarily mutually exclusive, as some aspects of this disclosure can be combined with one or more other aspects of this disclosure to form new aspects.

The word "exemplary" is used herein to mean "serving as an example, instance, or illustration". Any embodiment or design described herein as "exemplary" is not necessarily to be construed as preferred or advantageous over other embodiments or designs.

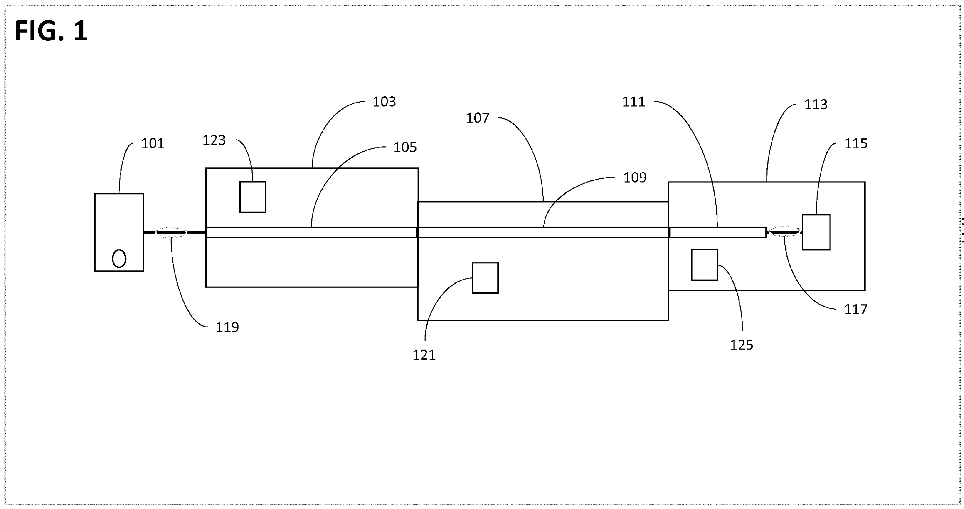

FIG. 1 shows an exemplary provisioning of a service to a device across networks boundaries. Specifically, the embodiment in FIG 1 shows an Application Function (AF) (115) that may provision a service S through an exemplary Non-Public Network (NPN) 113. In some exemplary embodiment, the service provided by AF 115 may be a vehicle related service, such as engine monitoring, and the network 113 may be a NPN provided by the maker of the vehicle; in other exemplary embodiments, the AF 115 may provide a service dedicated to mobile workers and the NPN 113 may be a network provided by the company employing the mobile workers.

In some embodiments, AF 115 may be a component of network 113, in other word to be a Network Function (NF) or Network Function Service(s) or one or more network services, which is provided by the same organization that provide the NPN 113. In other embodiments, NF 113 may be provided by a third-party operator that is independent of the organization providing the NPN 113. From the point of view of the described invention, NF 113 is to be considered a Network Function NF.

In the embodiments in FIG 1, NPN 113 may be connected to other networks such as the Public Land Mobile Network (PLMN) 107, which in turn may be connected to PLMN 103.

An exemplary device 101 may be connected to PLMN 103. In exemplary embodiments, the device 101 may be a User Device (UE), such as a mobile phone, or a M2M device, or a controller in a connected vehicle, or any type of connected device. In the exemplary embodiment in FIG 1, device 101 may be roaming in PLMN 103 from PLMN 107. In other words, network PLMN 103 may be a Visiting PLMN (VPLMN) of device 101, while the network 107 may be the Home PLMN (HPLMN) of device 101.

In the exemplary embodiment in FIG 1, the service provided by AF 115 may be provided to device 101; in other words, AF 115 may be considered as the service provider, and device 101 may be considered a service consumer. Since the provisioning of a service may have strict service requirements, such service provisioning may require the provisioning of network slice that may span across networks 113, 107, 103. In the exemplary embodiment in FIG 1, the sign 111 may indicate a portion of such slice in PLMN 113, the sign 109 may indicate the portion of such slice in PLMN 107, and the sign 105 which may represent the portion of the slice in PLMN 103. In FIG. 1. Furthermore, the sign 117 may indicate that the AF 115 is connected to slice 111, while the sign 119 may indicate that device 101 is connected to slice 105.

Networks and slices are complex constructs, therefore network such as NPNs and PLMNS, may require a number of Network Functions (NF) that may be connected with different functions that may be required to create, maintain, monitor, etc., different aspects of the network and of slices, In FIG 1, exemplary NFs are depicted as signs 121, 123, 125. In some embodiments, NF 121 may be an Access Mobility Function (AMF), the NF 123 may be Session Management Function (SMF) and the NF 125 may be a may be a Network Data Analytics Function (NWDAF). The person skilled in the art of communication networks would readily recognize that the NFs 121, 123, 125 are purely exemplary, and that the functioning of each one of networks 103, 107, and 113 requires the orchestration of a plurality of such NFs to maintain the proper connectivity in each one of the networks, as well as for managing slices, roaming, and more generally to execute all functions that required for the correction function of each network.

The quality of the service provided by AF 115 as experience by device 101 may depend on the quality of the service provided by each one of the slices 105, 109, and 111. Indeed, if one of the slice segments, for example slice 109, provides a poor quality of service, the quality of service experienced by device 101 may be poor independently of the quality provided by slices 105 and 111. Furthermore, the quality of service of the slices 105, 109, and 111 may depend on the load and the operating conditions of any one of the NFs that enables slices105, 109, and 111.

Network operators or other third-party entities or simple Network Functions that may want to provide any guarantee on the quality of service provided by service providers such as AF 115 as experienced by service consumers such as device 101 may need to guarantee that all involved slices provide the desired quality of service, which in turn may require to monitor the quality of service provided by the slices 105, 109, and 111, and possibly monitor the operating conditions of the NFs that realize such slices, as the exemplary NFs 123, 121, 125.

The first step towards monitoring the quality of service that may be provided by NFs and by slices consists in defining an architecture and protocols for the collection of data and analytics on the status of any NF in a network.

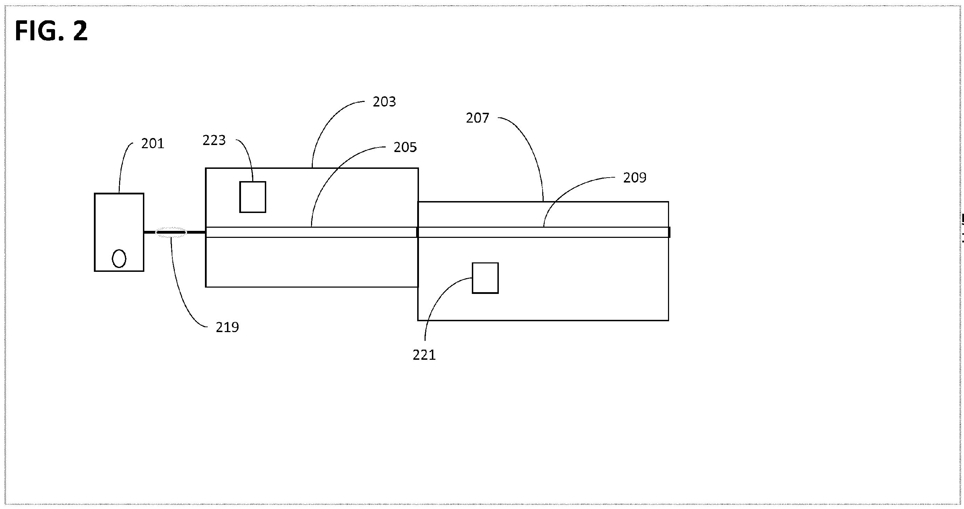

FIG. 2 an exemplary scenario with multiple communication networks. In the embodiments in FIG 2, 207 is communication network such as PLMN or NPN may be connected to other networks such as the another PLMN or NPN 203.

An exemplary device 201 may be connected to network 203. In some exemplary embodiments, the device 201 may be a User Device (UE), such as a mobile phone, or a M2M device, or a controller in a connected vehicle, or any type of connected device.

In the exemplary embodiment in FIG 2, device 201 may be roaming in network 203 from network 207. In other words, network 203 may be a Visiting network, while the network 207 may be the Home network of device 201 or network 203 may be a visiting NPN 201, while the network 207 may be the Home NPN of device 201. In another exemplary embodiment in FIG 2, device 201 may be roaming in PLMN 203 from NPN 207.

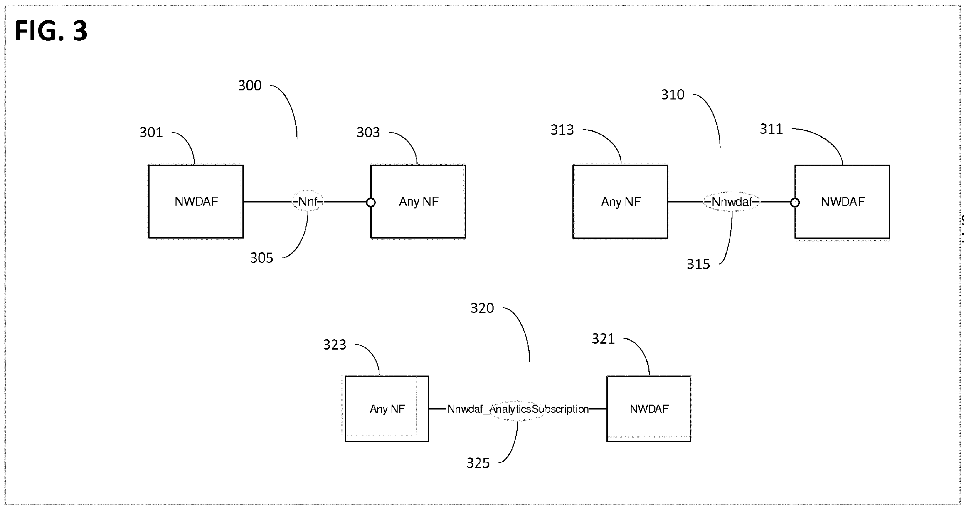

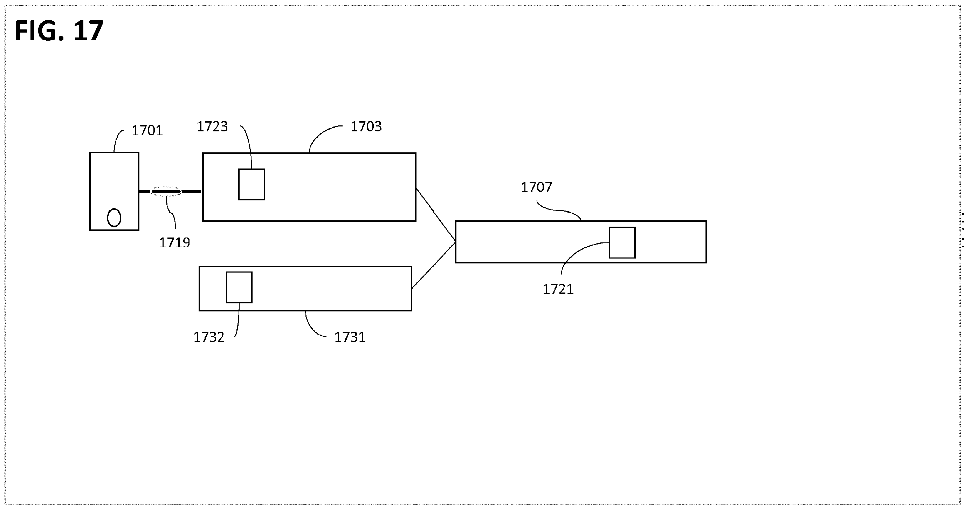

FIG. 17 shows an exemplary roaming scenario across networks. In the embodiments in FIG 3, 1707 is communication network such as Home network (HPLMN) connected to other Visiting networks (VPLMNs) 1703, 1731.

An exemplary device 1701 may be connected to network 1703. In some exemplary embodiments, the device 1701 may be a User Device (UE), such as a mobile phone, or a M2M device, or a controller in a connected vehicle, or any type of connected device.

In the exemplary embodiment in FIG 17, device 1701 may be roaming in network 1703 from network 17031. In other words, network 1703 may be a Visiting network (VPLMN#2), while the network 1731 may be another Visiting network (VPLMN#1) and device's Home network (HPLMN) 1707. In another exemplary embodiment in FIG 3, device 1701 may be roaming from PLMN 1731 to PLMN 1.

FIG. 3 shows exemplary embodiments 300, 310 and 320 of basic patterns of interaction between any Network Functions with regard to network analytics. In the exemplary embodiment 300, a NWDAF 301 collecting status data from any network function NF 303 e.g. AMF, SMF, etc. Such data collection may be performed through messages of type Nnf, which may correspond to Namf_service_name in case it refers to the AMF, wherein the data flows from the NF 313 to the requesting NWDAF 311.

In the exemplary embodiment 310, a NWDAF 311 may provide network analytics any network function NF 313. Such data provisioning may be performed through messages of type Nnwdaf 315.

In the exemplary embodiment 320, a NWDAF provides network analytics to any network function NF 323, wherein the network analytic data provisioning is performed through a subscription protocol of type Nnwdaf_AnalyticSubscription wherein NWDAF 321 first receives a subscription request from NF 323 and respond with one or more notifications with the updates related to the query.

Examples of network analytics may include load analytics, user data congestion analytics, slice analytics, service experience analytics, network and/or slice performance analytics and QoS prediction, etc.

NF load analytics may include statistics or predictions or both, about the load of a NF for which the load analytics was requested. Alternatively, load analytics may relate to the load of network functions and their service(s), as for example AMF, N3IWF, SMF and PCF that serve a specific device, such as a UE.

User Data Congestion related analytics that may relate to congestion experienced while transferring user data over the control plane or user plane. Such analytics may include the type of data, in other words whether user plane or control plane data is requested; congestion level, and a time window to which the data may refer to. Congestion data may also refer to Radio Access Network (RAN) congestion, in other words it may refer to congestion notifications in one or more areas determined by Tracking Area Lists-(TAI) or in one or more cells determined by cell identifications (cell ID).

Slice analytics may include slice load information such as load level and threshold value.

The embodiments presented above and further embodiments below, refer to network functions and NWDAF. These embodiments have to be understood at preferred embodiments of the invention. In general, a NWDAF may be regarded as an example of a network function and/or a component/module of a NWDAF for providing network analytics, while other network functions may be regarded as network function for requesting network analytics.

Furthermore, the embodiments presented above and further embodiments below ma refer to exemplary message types such as Nnf, Nnwdaf, and Nnwdaf_AnalyticSubscription. Such references have to be understood as exemplary of message types implement message exchanges such as inquiry/reply where an inquiry for network data analytics information is followed by a reply with the requested network data analytics information, or where a subscription for network data analytics information is followed by one or more notifications or updates with the requested network data analytics information.

In addition, the person skilled in the art would recognize that the provisioning of data analytics may be conditioned to an authorization of the requester. Therefore, a requester of network analytics information such as NWDAF 301, NF 313, and NF 323 may include in the information request message or in the subscription message request authorization information, such as credentials, that show the authorization of the requester to receive the requested network analytics information. When the information requester is not authorized, the information provider, such as NF 303, NWDAF 311 and 321, may include in the response or in the notification a rejection message and no network analytics information. Furthermore, the person skilled in the art would recognize that the functionalities of the NWDAF may be provided by a plurality of different Network Services, may act independently or orchestrated.

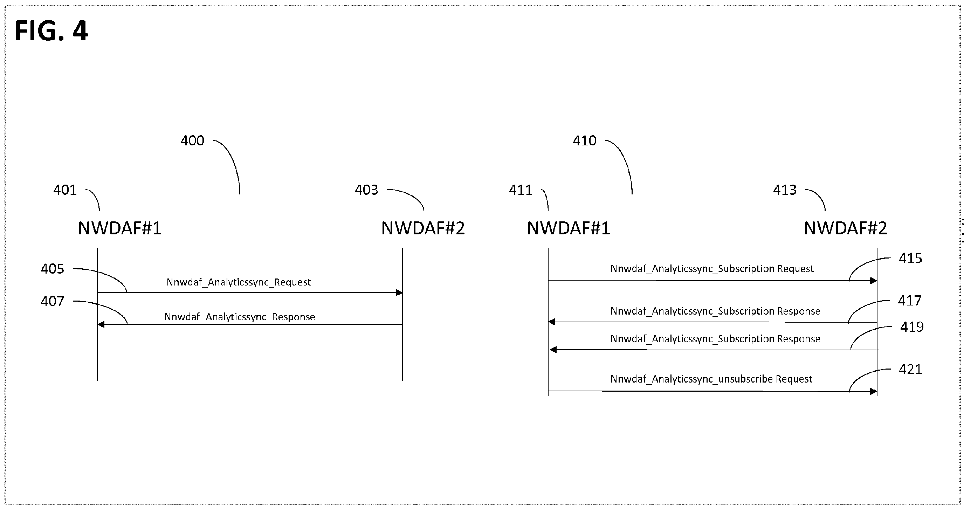

FIG. 4 shows exemplary embodiments of analytic synchronization between NWDAFs. In embodiment 400, NWDAF#1 401 may request NWDAF#2 403 to provide analytic data, for example by sending a message of type "Nnwdaf_Analyticssync_Request" 405. In turn, NWDAF#2, may respond with a response message of type "Nnwdaf_Analyticssync_Response" 407 where the requested analytics is provided.

In embodiment 310, NWDAF#1 401, may issue a subscription request of type "Nnwdaf_Analyticssync_Subcription Request" 415 which may indicate to NWDAF#2, that the first registry, NWDAF#1, may want to be notified of updates for example of the load information of a given NF or slice; therefore, the first registry, NWDAF#1, may provide the requested information. NWDAF#2 may issue one or more notifications of type "Nnwdaf_Analyticssync_Subscription Response" 417, 419, in relation to changes in the analytic data related to the subscription request 415. The process of providing updates ends upon receiving a "Nnwdaf_Analyticssync_unsubscribe Request" 421.

The "Nnwdaf_Analyticssync_Subcription Request" 415 may comprise a number of triggers for updates, in some embodiments, a triggers may lead to provide an update only when the corresponding values increase above a given threshold, in another embodiment or simply when the increase step is above a given amount, such as above 10 % increase, other triggers may be temporal: such as to provide an update every 20 minutes; other triggers may be based on complex conditions, which may involve multiple parameters of different type.

Direct synchronization between NWDAFs may be required when network analytics information across network boundaries is required. An embodiment of such network boundaries may be administrative domains within the same PLMN. In such an embodiment, each administrative domain may be characterized by a set of network functions and at least one NWDAF that collects status information about one or more NF(s) within the administrative domain.

Any slice or communication that cross administrative domains may involve NFs from different administrative domains, which in turn may require NFs in one administrative domain to gather information about NFs the reside in other administrative domains.

One way to address such case may simply be to interface NWDAFs across administrative domains. In such case any NF in one domain may interact with a NWDAF in that domain, and that NWDAF may in turn interact with NWDAFs in other domains as show in the embodiments in FIG. 4. As a result, information such as load of NFs may be available on both sides of the administrative domains.

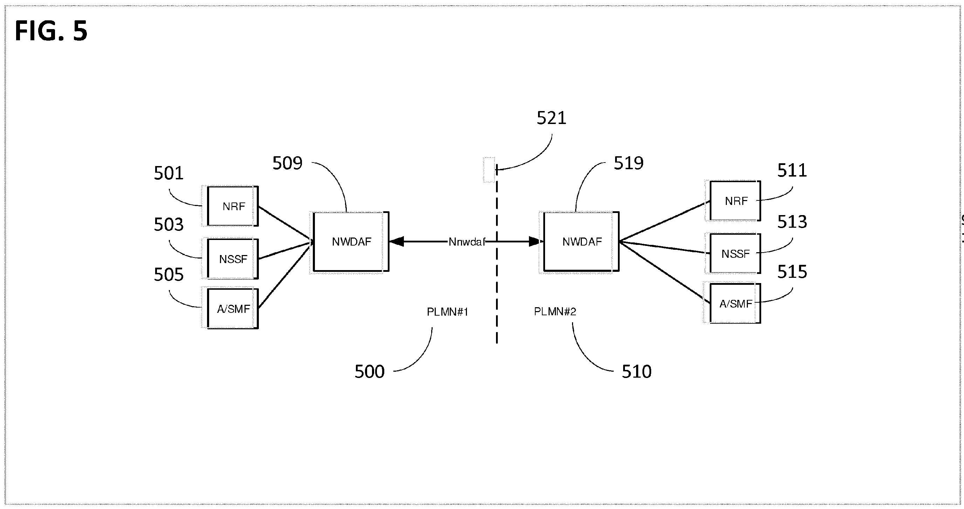

FIG. 5 shows an exemplary embodiment of network analytics synchronization between NWDAFs across PLMN boundaries, including a first PLMN, namely PLMN#1, 500 and a second PLMN, namely PLMN#2 510. PLMN#1 may include a first NWDAF 509 which collects network analytic data about network functions within PLMN#1 which may include an exemplary Network Repository Function (NRF) 501, an exemplary Network Slice Selection Function (NSSF) 503, and an exemplary AMF or SMF or UPF 505. PLMN#2 may include a second NWDAF 519 which collects network analytic data from network functions within PLMN#2 which may include an exemplary Network Repository Function NRF 511, and exemplary Network Slice Selection Function NSSF 513, and an exemplary AMF or SMF or UPF 515.

The NWDAFs 509 and 519 may synchronize network analytics information about the NFs in each other PLMN following the general schemata described in FIG 4, for example on per UE or per Slice or per session or per NF or per PLMN bases. Furthermore, the collection of information may be proactive, in other words one NWDAF, for example NWDAF 509, may periodically collect information from other NWDAF 519 without any request from any NF in PLMN#1 500; or reactively for example through an explicit analytic request from any NF in PLMN#1 500.

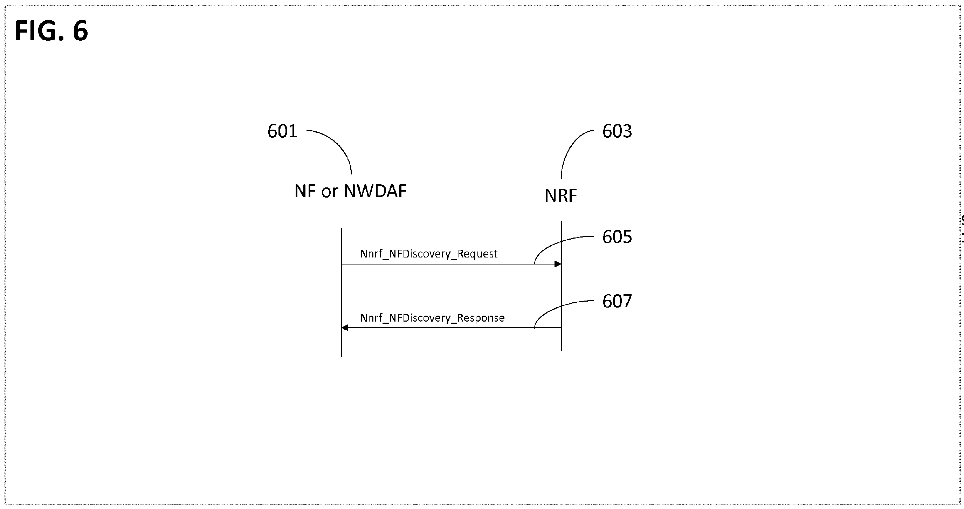

FIG. 6 shows an exemplary process to discover NWDAFs within a network or across network boundaries, such as in case of roaming. In FIG: 6, 601 indicates that the NWDAF discovery process may be initiated by either a network function NF(s), which may require network analytic information about other network functions, or by a NWDAF(s), which may require to perform network analytics synchronization/gathering with the discovered NWDAF, for example as shown in relation to FIG. 5.

NWDAFs may be discovered either through local configurations or through a discovery process involving an inquiry to an NRF, as the exemplary NRF 603 and/or through a Service Communication Proxy (SCP). Such an inquiry may be a discovery request message of type "Nnrf_NFDiscovery_Request" 605 directed from the NRF or the NWDAF 601 to the NRF 603.

The NRF 603 may respond to the discovery request with a discovery response message of type "Nnrf_NFDiscovery_Response" 607 directed to the NRF or the NWDAF 501.

In case multiple instances of NWDAF are deployed in the network, multiple NWDAFs may be discovered'. The NWDAF selection function within the NF or NWDAF 601 may select the required NWDAF on the bases of the factors such as Single Network Slice Selection Identifier (S-NSSAI), Analytics ID(s), NWDAF Serving Area information, e.g. list of TAIs related to analytics generated by a NWDAF.

In a roaming scenario, the discovery request may also indicate the PLMN ID of a UE related to the discovery, such PLMN ID may get from a Subscription Concealed Identifier (SUCI) or Subscription Permanent Identifier (SUPI), HPLMN S-NSSAI(s), a Visited network identifier such as MNC and MCC. In case of inter-PLMN handover, in other words handover from a first VPLMN (VPLMN#1) to a second VPLMN (VPLM#2), additional information may be added to the discovery request message such as the PLMN ID of visited PLMN, such as a Mobile Network Code (MNC) and Mobile Country Code (MCC), of the target PLMN, for example VPLMN#2, if a UE is handed over from VPLMN#1 to VPLMN#2, S-NSSAI(s) of target visited network.

In case of discovery within a NPN, the discovery request may include NPN ID(s), such as PLMN ID + NID (Network Identifier) and/or Stand-alone Non-Public Network Identifier (SNPN ID) and/or Closed Access Group Identifier (CAG ID) and/or other NPN identifications.

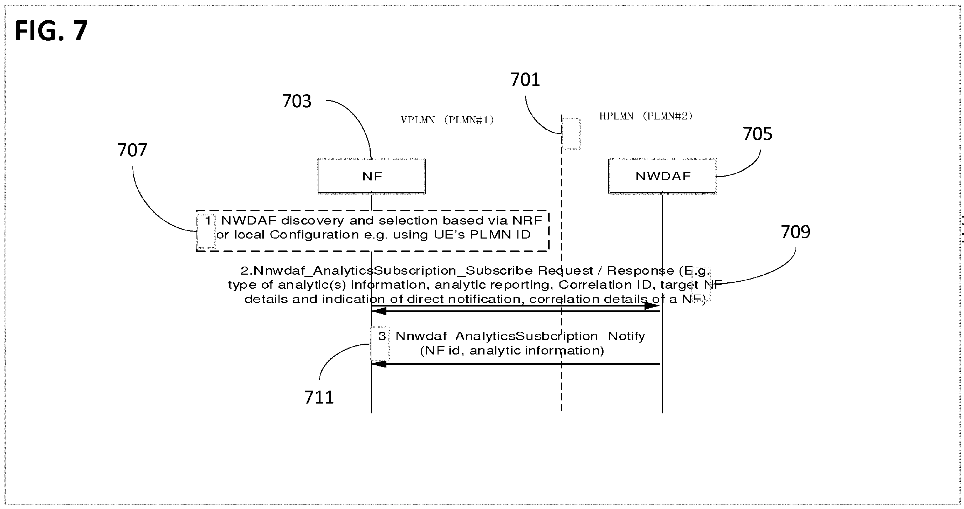

FIG. 7 shows an embodiment in which a NF in the VLPLM may discover and inquiry a NWDAF in the HPLMN. Specifically, FIG. 7 shows a sequence diagram representing an embodiment of an interaction between a network function NF and a NWDAF requiring both discovery and roaming. The embodiment may comprise a first network (PLMN#1) and a second network (PLMN#2), wherein line 701 may indicate the network boundary between the two networks. Furthermore, PLMN#1 may be the VPLMN of a roaming UE, not shown; whereas PLMN#2 may be the UE HPLMN.

In FIG. 7, PLMN#1 may comprise a network function NF 703, while PLMN#2 may comprise a NWDAF 705. In the interaction, NF 703 may attempt to discover a NWDAF in PLMN#2, to this extent, it may perform a discovery and selection process via an NRF, not shown, or through a local configuration or through SCP, for example by using the UE's PLMN ID. The result of such a discovery and selection process may be NWDAF 705. Alternatively, the selection process may be an explicitly component/module/service of a NWDAF.

Upon discovering NWDAF 705, NF 703 may issue a subscribe request towards the NWDAF 705 wherein the subscription request may be a message of type Nnwdaf_AnalyticsSubscription_Subscribe Request/Response. 709. which may also comprise information such as type of analytic(s) information, analytic reporting frequency, Notification Correlation ID of NWDAF, in case of direct notification to another specific NF, then another NF details such as Notification Correlation ID of another NF, Fully Qualified Domain Name (FQDN), etc., and an explicit direct notification indication such that the NWDAF will knows that notifications are sent to another NF.

Upon receiving the subscription request NWDAF 705 may issue a first notification 711 directed to NF 703, wherein the notification may be a messages of type Nnwdaf_AnalyticsSusbcription_Notify and they may include NF id of the requested NF and the requested Analytic information.

Since message 709 was a subscription message, the NWDAF may issue other notification messages (not shown) that may be analogous to notification 711 until an unsubscribe message (not shown) may be issued by NF 703 or time bound subscription information provided in 709.

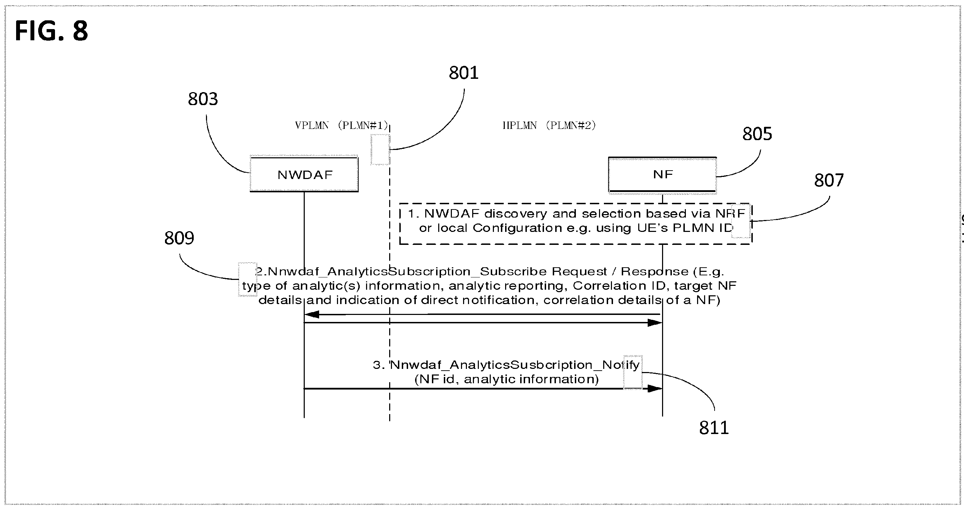

FIG. 8 shows an embodiment in which a NF in the HLPLM may discover and inquiry a NWDAF in the VPLMN. The embodiment in FIG. 8 is analogous to the embodiment in FIG. 7 with the only change that the PLMNs are swapped. The embodiment may comprise a first network (PLMN#1) and a second network (PLMN#2), wherein line 801 may indicate the network boundary between the two networks. Furthermore, PLMN#1 may be the VPLMN of a roaming UE (not shown) whereas PLMN#2 may be the UE HPLMN.

PLMN#1 may comprise a network function NWDAF 803, while PLMN#2 may comprise a NF 805. The NF 805 from PLMN#2 may attempt to discover a NWDAF in PLMN#1, to this extent, NF 805 may perform a discovery and selection process 807 via an NRF (not shown) or through a local configuration, for example by using the UE's PLMN ID. The result of such a discovery and selection process may be NWDAF 803.

Upon discovering NWDAF 803, NF 805 may issue a subscribe request 809 towards the NWDAF 803 wherein the subscription request may be a message of type Nnwdaf_AnalyticsSubscription_Subscribe Request/Response which may also comprise information such as type of analytic(s) information, analytic reporting frequency, Notification Correlation ID of NWDAF, in case of direct notification to another specific NF, then another NF details such as Notification Correlation ID of another NF, Fully Qualified Domain Name (FQDN), etc., and an explicit direct notification indication such that the NWDAF will know that notifications are sent to another NF.

Upon receiving the subscription request NWDAS 803 may issue a first notification 811 directed to NF 805, wherein the notification may be a messages of type Nnwdaf_AnalyticsSusbcription_Notify and they may include NF id of the requested NF and the requested Analytic information.

Since message 809 was a subscription message, the NWDAF may issue other notification messages (not shown) that may be analogous to notification 811 until an unsubscribe message (not shown) may be issued from NF 805.

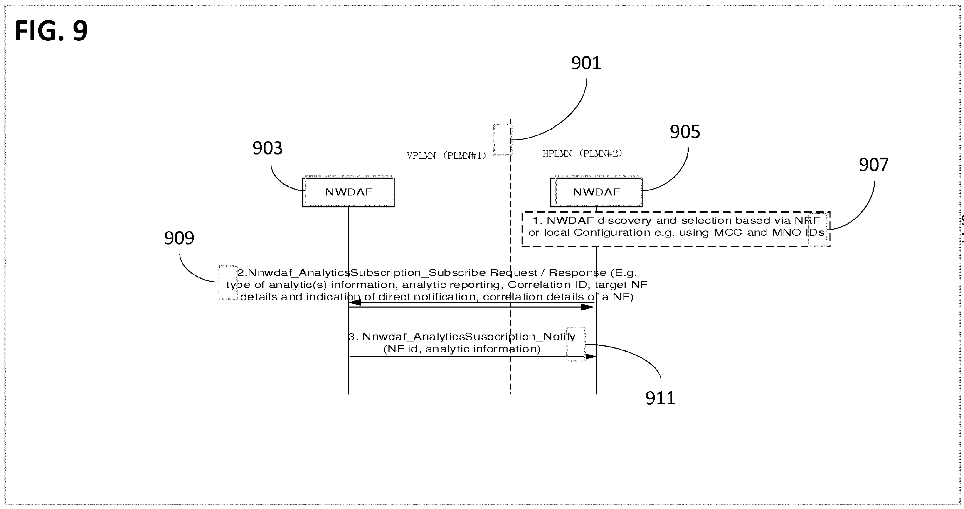

FIG. 9 shows an embodiment in which a NWDAF in the HLPLM may discover and inquiry a NWDAF in the VPLMN. The embodiment may comprise a first network (PLMN#1) and a second network (PLMN#2), wherein line 901 may indicate the network boundary between the two networks. Furthermore, PLMN#1 may be the VPLMN of a roaming UE (not shown) whereas PLMN#2 may be the UE HPLMN.

PLMN#1 may comprise a network function NWDAF 903, while PLMN#2 may comprise a NWDAF 905 which may attempt to discover a NWDAF in PLMN#1, to this extent, NF 905 may perform a discovery and selection process 907 via an NRF (not shown) or through a local configuration, for example by using the UE's PLMN ID. The result of such a discovery and selection process may be NWDAF 903.

Upon discovering NWDAF 903, NWDAF 905 may issue a subscribe request 909 towards the NWDAF 903 wherein the subscription request may be a message of type Nnwdaf_AnalyticsSubscription_Subscribe Request/Response which may also comprise information such as type of analytic(s) information, analytic reporting frequency, Notification Correlation ID of NWDAF, in case of direct notification to another specific NF, then another NF details such as Notification Correlation ID of another NF, Fully Qualified Domain Name (FQDN), etc., and an explicit direct notification indication such that the NWDAF will know that notifications are sent to another NF..

Upon receiving the subscription request NWDAF 903 may issue a first notification 911 directed to NWDAF 905, wherein the notification may be a messages of type Nnwdaf_AnalyticsSusbcription_Notify and they may include NF id of the requested NF and the requested Analytic information.

Since message 909 was a subscription message, the NWDAF may issue other notification messages (not shown) that may be analogous to notification 911 until an unsubscribe message (not shown) may be issued from NWDAF 905.

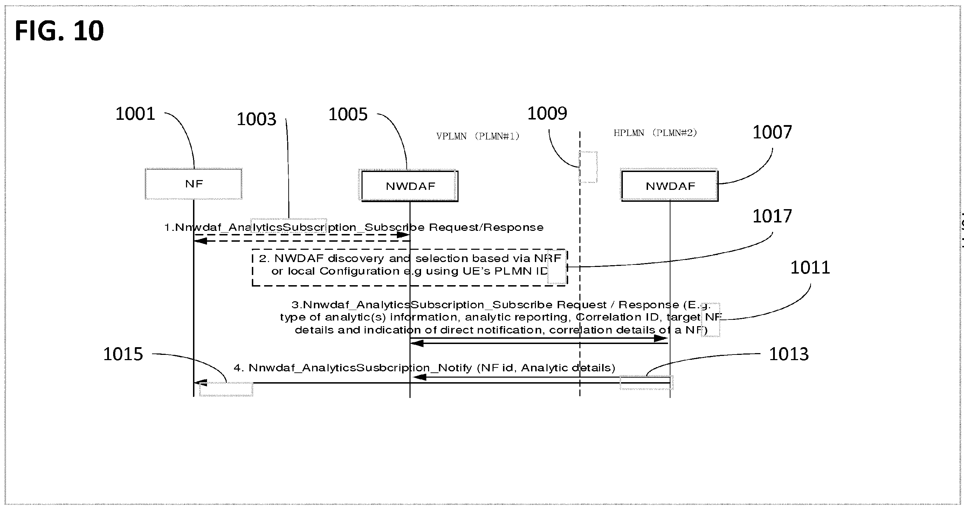

FIG. 10 shows an embodiment in which a NF in the VPLMN may inquiry a NWDAF in the VPLMN which in turn may discover and inquiry a NWDAF in the HPLMN. Specifically, the embodiment in FIG. 10 comprises a first network (PLMN#1) and a second network (PLMN#2), wherein line 1009 may indicate the networks boundary between the two networks. Furthermore, PLMN#1 may be the VPLMN of a roaming UE (not shown) whereas PLMN#2 may be the UE HPLMN.

PLMN#1 may comprise two components, a network function NF 1001 and a NWDAF 1005. NF 1001 may issue a subscription request 1003 directed to NWDAF 1005, wherein the subscription request may be a message of type Nnwdaf_AnalyticsSubscription_Subscribe Request/Response.

To provide the networks analytics requested by the Subscribe Request received from NF 1001, NWDAF 1005 may needs to discover a NWDAF in PLMN#2. Therefore, NWDAF 1005 may perform a discovery and selection process 1017 via an NRF (not shown) or through a local configuration, for example by using the UE's PLMN ID. The result of such a discovery and selection process may be NWDAF. FIG 6 provides details of discovery mechanism and used factors to discovery the NWDAF in another communication network.

Upon completing the discovery of NWDAF 1007, NWDAF 1005 may issue a subscription request 1011 directed to NWDAF 1007, wherein the subscription request may be a message of type Nnwdaf_AnalyticsSubscription_Subscribe Request/Response which may also comprise information such as type of analytical(s) information, analytical reporting, Correlation ID, target NF details and indication of direct notification, correlation details of a NF), wherein the indication of direct notification and correlation details of an NF may include an indication of NF 901 as well as frequency, Notification Correlation ID of NWDAF, in case of direct notification to another specific NF, then another NF details such as Notification Correlation ID of another NF, Fully Qualified Domain Name (FQDN), etc., and an explicit direct notification indication such that the NWDAF will know that notifications are sent to another NF..

Upon receiving the subscription request NWDAF 1007 may issue a notification directly to 1015 if a direct notification indication is provided in 1011, or else sends the notification 1013, wherein both messages are of type Nnwdaf_AnalyticsSusbcription_Notify and they may include NF id of the requested NF and the requested Analytic details.

Since message 1011 was a subscription message, the NWDAF may issue other notification messages (not shown) that may be analogous to notifications 1013 and/or 1015 until an unsubscribe message (not shown) may be issued from NF 1001 to NWDAF 1005, and in turn from NWDAF 1005 to NWDAF 1007.

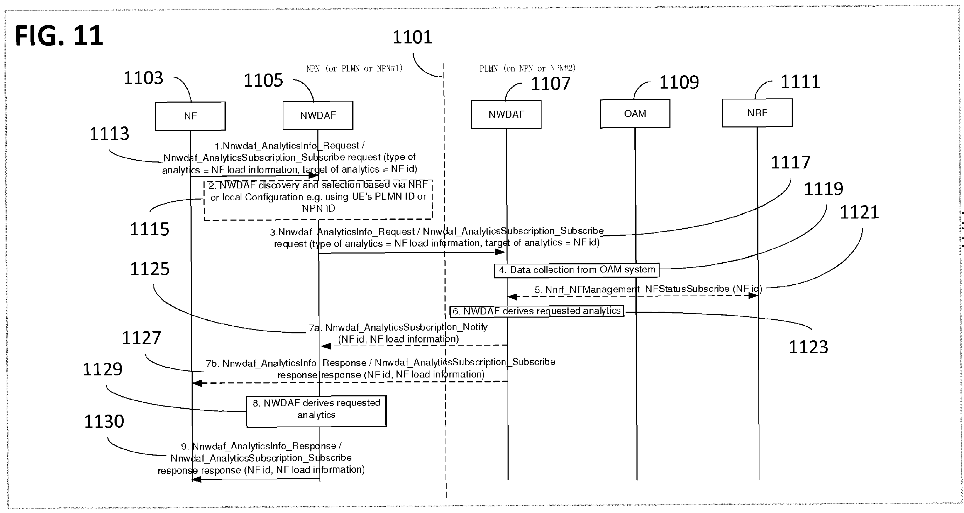

FIG. 11 shows a network embodiment which shows an example interaction provided between NWDAFs across NPNs and PLMNs. The embodiment may comprise a first network (NPN) and a second network (PLMN), wherein line 1001 may indicate the network boundary between the two networks. Furthermore, the first network may be an NPN or a PLMN or a first NPN#1 whereas the second network may be a PLMN or a NPN or a second NPN#2.

NF 1103 may issue a subscription request 1113 directed to NWDAF 1105, wherein the subscription request may be a message of type Nnwdaf_AnalyticsSubscription_Subscribe Request/Response.

To provide the networks analytics requested by the Subscribe Request 1113 received from NF 1103, NWDAF 1105 may need to discover a NWDAF in PLMN. Therefore, NWDAF 1005 may perform a discovery and selection process 1015 via an NRF (not shown) or through a local configuration, for example by using the UE's PLMN ID or MCC and MNC of a PLMN.

Upon completing the discovery of NWDAF 1107, NWDAF 1105 may issue an analytics info request 1117 directed to NWDAF 1107, wherein the subscription request may be a message of type Nnwdaf_AnalyticsSubscription_Subscribe request which may also comprise information such as type of analytics, load information, and target of analytics

To perform the data collection required to answer the request, the NWDAF 1007 may perform a data collection from the Operations, Administration and Maintenance (OAM) system 1119 and issue a subscription of type Nnrf_NFManagement_NFStatusSubscribe(NF Id) to the NRF 1121, further the NWDAF 1107 may derive the requested analytics 1123.

Upon deriving the analytics, NWDAF 1107 may issue a notification message of type Nnwdaf_AnalyticsSusbcription_Notify which may also comprise information such as of the relevant NF id and NF information such as NF load information to the NWDAF 1105 and/or to the NF 1103.

Finally, in 1129 the NWDAF may derive the analytics requested by the NF 1103 and respond to message 1113 with message 1130.

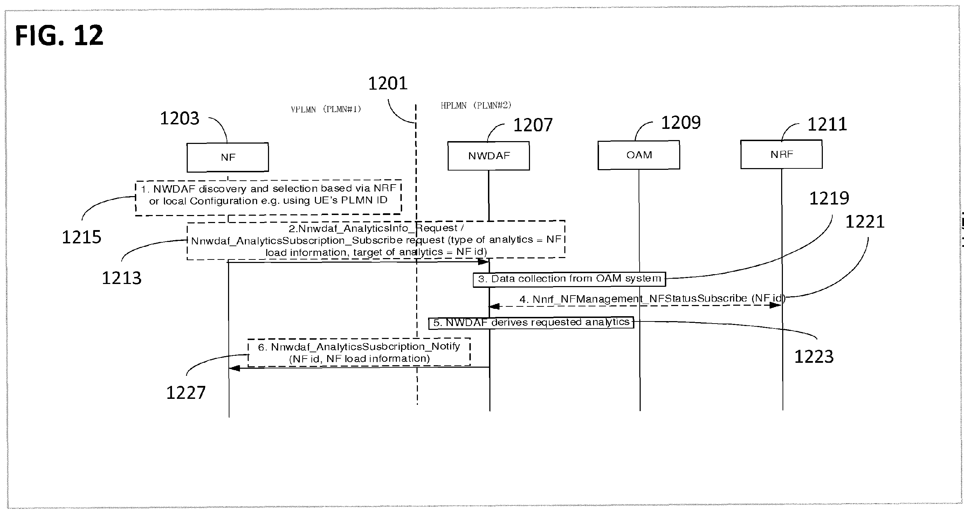

FIG. 12 shows a further refinement of the embodiment in FIG 11 in which a network function NF may cross the network boundaries without the mediation of any NWDAF.

The shown in FIG. 12 embodiment may comprise a first network (PLMN#1) and a second network (PLMN#2), wherein line 1201 may indicate the network boundary between the two networks. Furthermore, PLMN#1 may be the VPLMN of a roaming UE (not shown) whereas PLMN#2 may be the UE HPLMN.

NF 1203 may attempt to discover a NWDAF in PLMN#2. Therefore, the network function 1203 may perform a discovery and selection process 1211 via an NRF (not shown) or through a local configuration, for example by using the UE's PLMN ID. The result of such a discovery and selection process may be NWDAF.

Upon completing the discovery of NWDAF 1207, the network function 1203 may issue a subscription request 1213 directed to NWDAF 1207 wherein the subscription request may be a message of type Nnwdaf_AnalyticsSubscription_Subscribe request.

To perform the data collection required to answer the request, the NWDAF 1207 may perform a data collection from the OAM system 1219 and issue a subscription of type Nnrf_NFManagement_NFStatusSubscribe(NF Id) to the NRF 1221, further the NWDAF 1207 may derive the requested analytics 1223.

Upon deriving the analytics, NWDAF 1207 may issue a notification message of type Nnwdaf_AnalyticsSusbcription_Notify which may also comprise information such as of the relevant NF id and NF information such as NF load information to the NF 1203.

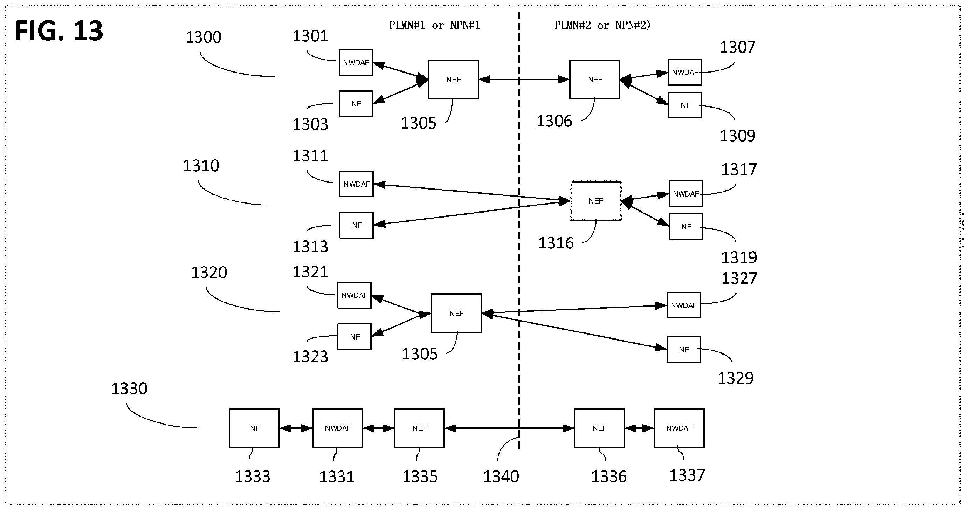

FIG. 13 shows embodiments of networks which may include Network Exposure Functions (NEF). NEFs in a network may have the role to expose the Application Programming Interfaces (API) of functions that reside in external networks, such as, for example, Application Functions (AF) or NF of another communication network. Furthermore, the NEFs may perform additional operations to interface AFs or NFs from other network to the network in which they reside such as for example authorization checking, to check the authorization of any external request before allowing the request and then forward the request to respective network function(s).

In the embodiments in FIG. 3 exemplary NEFs in one network may prevent network functions from other networks, or other administrative domains to discover the topology of their network. More generally, each one of the NEFs may hide the topology of the network that hides behind the NEF. In other words, the NEFs may act like a gateway functions that beyond their authorization capabilities, protect the privacy and confidentiality of their networks.

In FIG. 13, the signs 1300, 1310, 1320, and 1330 may indicate an exemplary embodiments comprising a first network that may be an exemplary PLMN#1 or an exemplary NPN#1 and a second network that may be an exemplary PLMN#2 or an exemplary NPN#2, wherein the dotted line 1340 may indicate the network boundary between the two networks. In the configuration.

In embodiment 1300, NEF 1305 may hide structure of the first network, which may be indicated by the exemplary NWDAF 1301 and NF 1303, from the second network. Similarly, NEF 1306 may hide structure of the second network, which may be indicated by the exemplary NWDAF 1307 and NF 1309, from the first network. For illustrative reasons, the exemplary first and second network are described as containing only one NWDAF and only one NF. The person skilled in the art would recognize that in reality such networks may be more complex and include a plurality of network functions.

In embodiment 1310, the structure of the first network is not protected by any NEF, therefore the exemplary NWDAF 1311 and NF 1313 may be visible from the second network. On the opposite, NEF 1316 may hide structure of the second network, which may be indicated by the exemplary NWDAF 1317 and NF 1319, from the first network.

Embodiment 1320, is the dual of 1310. NEF 1325 may hide structure of the first network, which may be indicated by the exemplary NWDAF 1321 and NF 1323, from the second network. On the opposite, the structure of the second network is not protected by any NEF, therefore the exemplary NWDAF 1327 and NF 1323 may be visible from the first network.

Embodiment 1330 is analogous to embodiment 1300, NEF 1335 may hide structure of the first network, which may be indicated by the exemplary NWDAF 1331 and NF 1333, from the second network. Similarly, NEF 1336 may hide structure of the second network, which may be indicated by the exemplary NWDAF 1337 and NF 1339, from the first network. The only difference between the two embodiments is that NF 1333 may interact directly with NWDAF 1331 and therefore NF 1333 may not be aware of the second network.

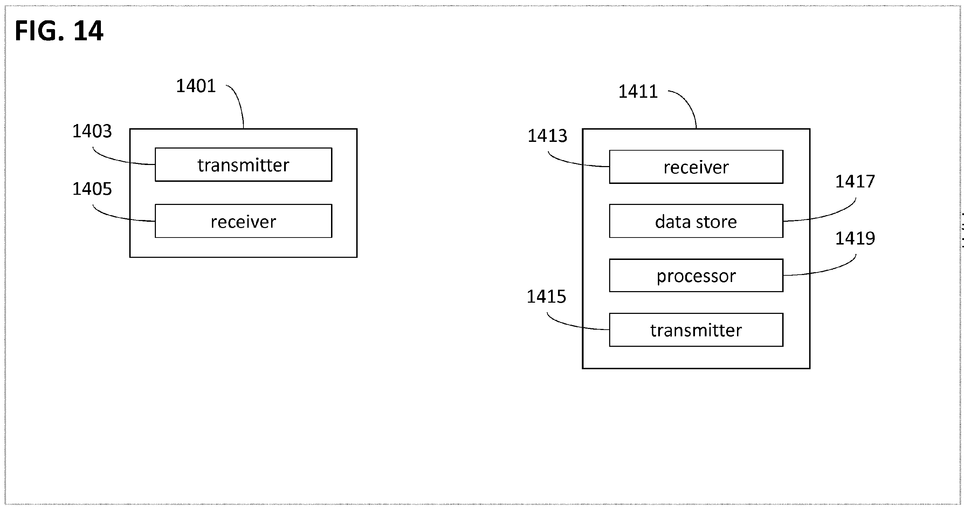

FIG. 14 shows an embodiment of a service network function for requesting network analytics 1401, and a network function for providing network analytics 1411.

The network function for requesting network analytics 1401 may comprise a transmitter 1403 configured to transmit a request for data analytics information to a network function for providing network analytics wherein the request for data analytics information comprises the identification of a further network function and an indicator of the data analytics about the further network function requested.

The network function for requesting network analytics 1411 may further include a receiver 1405 configured to receive a response to the request for data analytics from the receiving network function, wherein the response to the request for data analytics from the network function for providing network analytics comprises the data analytics about the further network function or a rejection.

The network function for providing network analytics 1411 may comprise a receiver 1413 configured to receive a request for data analytics from a network function for requesting network analytics requesting network function wherein the request for data analytics information comprises the identification of a further network function and an indicator of the data analytics about the further network function requested.

A data store 1417 configured to store data analytics related at least to the further network function.

A processor 1419 configured to process data analytics related to at least the further network function retrieved from the store.

A transmitter 1415 configured to transmit a response to the request for data analytics from the data analytics information from a network function to the data analytics information from a network function, wherein the response to the request for data analytics comprises the data analytics about the further network function retrieve by the processor or a rejection.

The network function for requesting network analytics 1401 and the network function for providing network analytics 1411 may be implemented as computer devices wherein each computer device may include a plurality of processors and/or one or a plurality of controllers. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The computing device may also be a virtualized device which is executed by one or more physical devices. In addition, the computing devices may be a network device residing in a cloud, or they may be configured to execute some functions in the cloud for example through remote API calls.

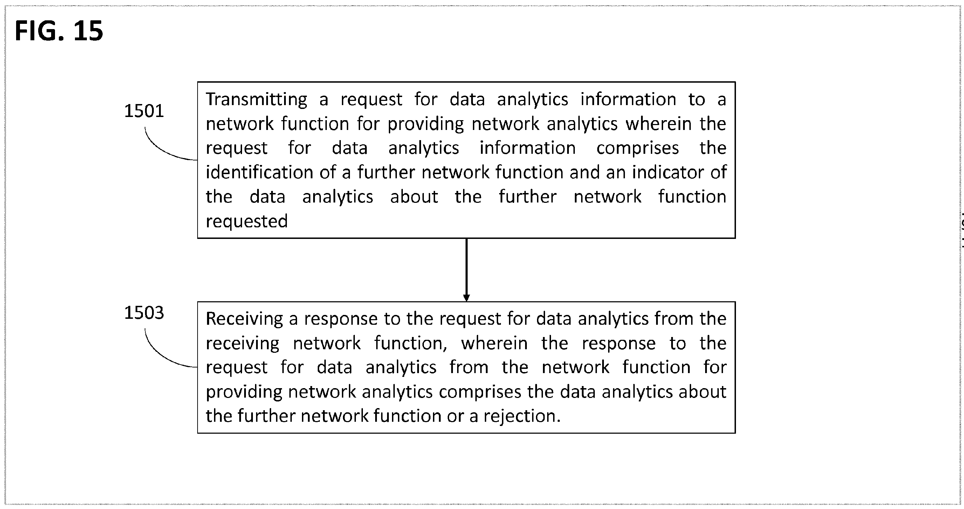

FIG. 15 shows an exemplary method for requesting network analytics. The method comprises a step 1501 that may consist in transmitting a request for data analytics information to a network function for providing network analytics wherein the request for data analytics information comprises the identification of a further network function and an indicator of the data analytics about the further network function requested; and of step 1403 consisting in receiving a response to the request for data analytics from the receiving network function, wherein the response to the request for data analytics from the network function for providing network analytics comprises the data analytics about the further network function or a rejection.

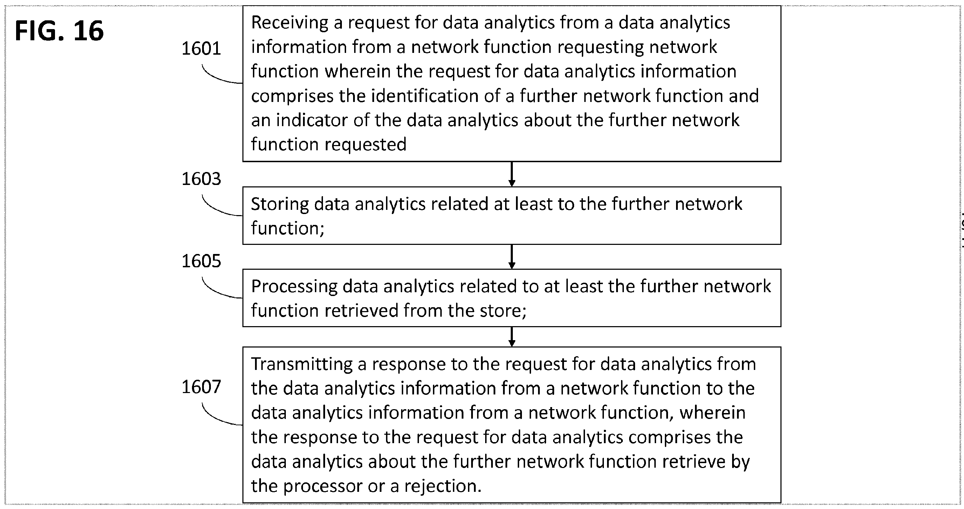

FIG. 16 shows an exemplary method for providing network analytics. The method comprises a step 1601 receiving a request for data analytics from a data analytics information from a network function requesting network function wherein the request for data analytics information comprises the identification of a further network function and an indicator of the data analytics about the further network function requested.

Step 1603 involves storing data analytics related at least to the further network function.

Step 1605 involves processing data analytics related to at least the further network function retrieved from the store.

Step 1607 involves transmitting a response to the request for data analytics from the data analytics information from a network function to the data analytics information from a network function, wherein the response to the request for data analytics comprises the data analytics about the further network function retrieve by the processor or a rejection.

## Claims

1. A network function for requesting network analytics, comprising:
a transmitter configured to transmit a request for data analytics information to a network function for providing network analytics wherein the request for data analytics information comprises the identification of a further network function and/or an indicator of the data analytics about the further network function requested;
a receiver configured to receive a response to the request for data analytics from the receiving network function, wherein the response to the request for data analytics from the network function for providing network analytics comprise the data analytics about the further network function or a rejection;
wherein the request is for data analytics information is an inquiry for data analytics information and the response is a reply or the request is a subscription for data analytics information and the response comprises one or more notifications.

2. The network function for requesting network analytics of claim 1 wherein
the request for data analytics information further comprises a Single Network Slice Selection Identifier(s) and/or network function details of the further network function, and
the response to the request for data analytics further comprises slice load value of the slice indicated by the Single Network Slice Selection Identifier(s) and/or NF load of the network function indicated by the network function details.

3. The network function for requesting network analytics of claim 1 or 2 wherein
the request for data analytics information further comprises authorization information.

4. The network function for requesting network analytics of any one of claim 1 to 3 wherein
at least one of the network functions for requesting network analytics and the network function for providing network analytics is a Network Data Analytics Function.

5. The network function for requesting network analytics of any one of claims 1 to 4 wherein:
the receiver is further configured to receive from an originating network function a request for data analytics information wherein the request for data analytics information comprises the identification of the further network function and an indicator of the data analytics about the further network function requested;
the transmitter is further configured to transmit the request for data analytics to the network function for providing network analytics further indicates the originating network function.

6. The network function for requesting network analytics of claim 5 further comprising:
a store configured to store data analytics related at least to the originating network function;
a processor configured to process of data analytics related at least to the originating network function retrieved from the store;
a transmitter configured to transmit a response to the request for data analytics from the originating network function to the originating network function, wherein the response to the request for data analytics comprises the data analytics about the originating network function retrieve by the processor or a rejection.

7. The network function for requesting network analytics of any one of claims 1 to 6 further comprising a discovery processor further configured to configure the transmitter to transmit to a Network Repository Function and/or Service Communication Proxy a discovery a request for a receiving network function, and configure the receiver to receive a response from the Network Repository Function and/or Service Communication Proxy wherein the response from the Network Repository Function and/or Service Communication Proxy comprises an indication of the receiving network function.

8. The network function for requesting network analytics of any one of claims 1 to 7 wherein:
the transmitter is further configured to transmit requests through a first network to the network function for providing network analytics in a second network; wherein the first network and the second network are different networks.

9. The network function for requesting network analytics of claim 8 wherein:
the first network is either a Public Land Mobile Network and/or a Non-Public Network and/or administrative domain of a network and
the second network is either a Public Land Mobile Network and/or a Non-Public Network and/or administrative domain of a network

10. The network function for requesting network analytics of claim 8 or 9 wherein:
the first network is Home Public Land Mobile Network and the second network is a Visiting Public Land Mobile Network or
the first network is Visiting Public Land Mobile Network and the second network is a Home Public Land Mobile Network or
the first network is Visiting Public Land Mobile Network and the second network is a Visiting Public Land Mobile Network.

11. A network function for providing network analytics comprising:
a receiver configured to receive a request for data analytics or a subscription for data analytics information from a network function for requesting network analytics requesting network function
wherein the request for data analytics information comprises the identification of a further network function and an indicator of the data analytics about the further network function requested;
a store configured to store data analytics related at least to the further network function;
a processor configured to process data analytics related to at least the further network function retrieved from the store;
a transmitter configured to transmit a response to the request for data analytics from the data analytics information from a network function to the data analytics information from a network function, wherein the response to the request for data analytics comprises the data analytics about the further network function retrieve by the processor or a rejection;
wherein the request is for data analytics information is an inquiry for data analytics information and the response is a reply or the request is a subscription for data analytics information and the response comprises one or more notifications.

12. The network function for providing network analytics of claim 11 wherein
the request for data analytics information further comprises a Single Network Slice Selection Identifier and/or network function details of the further network function, and
the response to the request for data analytics further comprises slice load value of the slice indicated by the Single Network Slice Selection Identifier and/or NF load of the network function indicated by the network function details.

13. The network function for providing network analytics of claim 11 or 12 wherein
the request for data analytics information further comprises authorization information;
wherein the processor is further configured to verify the authorization information, and to stop the retrieval from the store of data analytics related to the further network function if the verification of the authorization information fails;
wherein the transmitter is further configured to transmit a rejection if the verification of the authorization information fails.

14. A method for requesting network analytics comprising:
transmitting a request for data analytics information to a network function for providing network analytics wherein the request for data analytics information comprises the identification of a further network function and an indicator of the data analytics about the further network function requested;
receiving a response to the request for data analytics from the receiving network function, wherein the response to the request for data analytics from the network function for providing network analytics comprises the data analytics about the further network function or a rejection;
wherein the request is for data analytics information is an inquiry for data analytics information and the response is a reply or the request is a subscription for data analytics information and the response comprises one or more notifications.

15. A method for providing network analytics comprising:
receiving a request for data analytics from a data analytics information from a network function requesting network function wherein the request for data analytics information comprises the identification of a further network function and an indicator of the data analytics about the further network function requested;
storing data analytics related at least to the further network function;
processing data analytics related to at least the further network function retrieved from the store;
transmitting a response to the request for data analytics from the data analytics information from a network function to the data analytics information from a network function, wherein the response to the request for data analytics comprises the data analytics about the further network function retrieve by the processor or a rejection;
wherein the request is for data analytics information is an inquiry for data analytics information and the response is a reply or the request is a subscription for data analytics information and the response comprises one or more notifications.

## Amended claims

### Amended claims in accordance with Rule 137(2) EPC.

1. A network function (1401) for requesting network analytics, comprising:
a transmitter (1403) configured to transmit a request (709, 809) for data analytics information to a network function for providing network analytics wherein the request (709, 809) for data analytics information comprises the identification of a further network function and/or an indicator of the data analytics about the further network function requested;
a receiver (1405) configured to receive a response (705, 809) to the request (709, 809) for data analytics from the receiving network function, wherein the response (705, 809) to the request (709, 809) for data analytics from the network function for providing network analytics comprise the data analytics about the further network function or a rejection;
wherein the request (709, 809) for data analytics information is an inquiry for data analytics information and the response (705, 809) is a reply or the request (709, 809) is a subscription for data analytics information and the response (705, 809) comprises one or more notifications;
wherein the transmitter (1403) is further configured to transmit requests through a first network to the network function for providing network analytics in a second network; wherein the first network and the second network are different networks; and/or
wherein the receiver (1405) is further configured to receive the response (705, 809) through a first network from the network function for providing network analytics in a second network; wherein the first network and the second network are different networks.

2. The network function for requesting network analytics of claim 1 wherein
the request (709, 809) for data analytics information further comprises a Single Network Slice Selection Identifier(s) and/or network function details of the further network function, and
the response (705, 809) to the request (709, 809) for data analytics further comprises slice load value of the slice indicated by the Single Network Slice Selection Identifier(s) and/or NF load of the network function indicated by the network function details.

3. The network function for requesting network analytics of claim 1 or 2 wherein
the request (709, 809) for data analytics information further comprises authorization information.

4. The network function for requesting network analytics of any one of claim 1 to 3 wherein
at least one of the network functions for requesting network analytics and the network function for providing network analytics is a Network Data Analytics Function (509, 519, 1105, 1107).

5. The network function for requesting network analytics of any one of claims 1 to 4 wherein:
the receiver is further configured to receive from an originating network function a request (709, 809) for data analytics information wherein the request (709, 809) for data analytics information comprises the identification of the further network function and an indicator of the data analytics about the further network function requested;
the transmitter (1403) is further configured to transmit the request (709, 809) for data analytics to the network function for providing network analytics further indicates the originating network function.

6. The network function for requesting network analytics of claim 5 further comprising:
a store configured to store data analytics related at least to the originating network function;
a processor configured to process of data analytics related at least to the originating network function retrieved from the store;
a transmitter (1403) configured to transmit a response to the request (709, 809) for data analytics issued by the originating network function, to the originating network function, wherein the response (705, 809) to the request (709, 809) for data analytics comprises the data analytics about the originating network function retrieve by the processor or a rejection.

7. The network function for requesting network analytics of any one of claims 1 to 6 further comprising a discovery processor further configured to configure the transmitter (1403) to transmit to a Network Repository Function and/or Service Communication Proxy a discovery a request (709, 809) for a receiving network function, and configure the receiver to receive a response (705, 809) from the Network Repository Function and/or Service Communication Proxy wherein the response (705, 809) from the Network Repository Function and/or Service Communication Proxy comprises an indication of the receiving network function.

8. The network function for requesting network analytics of any one of claims 1 to 7 wherein:
the first network is either a Public Land Mobile Network and/or a Non-Public Network and/or administrative domain of a network and
the second network is either a Public Land Mobile Network and/or a Non-Public Network and/or administrative domain of a network

9. The network function for requesting network analytics of claim 8 wherein:
the first network is a Home Public Land Mobile Network and the second network is a Visiting Public Land Mobile Network or
the first network is a Visiting Public Land Mobile Network and the second network is a Home Public Land Mobile Network or
the first network is a Visiting Public Land Mobile Network and the second network is a Visiting Public Land Mobile Network.

10. A network function for providing network analytics comprising:
a receiver configured to receive a request (709, 809) for data analytics or a subscription for data analytics information from a network function for requesting network analytics requesting network function
wherein the request (709, 809) for data analytics information comprises the identification of a further network function and an indicator of the data analytics about the further network function requested;
a store configured to store data analytics related at least to the further network function;
a processor configured to process data analytics related to at least the further network function retrieved from the store;
a transmitter (1403) configured to transmit a response (705, 809) to the request (709, 809) for data analytics from the data analytics information from a network function to the data analytics information from a network function, wherein the response (705, 809) to the request (709, 809) for data analytics comprises the data analytics about the further network function retrieve by the processor or a rejection;
wherein the request (709, 809) is for data analytics information is an inquiry for data analytics information and the response (705, 809) is a reply or the request (709, 809) is a subscription for data analytics information and the response (705, 809) comprises one or more notifications;
wherein: the transmitter (1403) is further configured to transmit responses through a first network to the network function for providing network analytics in a second network; wherein the first network and the second network are different networks;
wherein the receiver (1405) is further configured to receive the response (705, 809) through a first network from the network function for providing network analytics in a second network; wherein the first network and the second network are different networks.

11. The network function for providing network analytics of claim 10 wherein
the request (709, 809) for data analytics information further comprises a Single Network Slice Selection Identifier and/or network function details of the further network function, and
the response (705, 809) to the request (709, 809) for data analytics further comprises slice load value of the slice indicated by the Single Network Slice Selection Identifier and/or NF load of the network function indicated by the network function details.

12. The network function for providing network analytics of claim 10 or 11 wherein
the request (709, 809) for data analytics information further comprises authorization information;
wherein the processor is further configured to verify the authorization information, and to stop the retrieval from the store of data analytics related to the further network function if the verification of the authorization information fails;
wherein the transmitter (1403) is further configured to transmit a rejection if the verification of the authorization information fails.

13. A method for requesting network analytics comprising:
transmitting a request (709, 809) for data analytics information to a network function for providing network analytics wherein the request (709, 809) for data analytics information comprises the identification of a further network function and an indicator of the data analytics about the further network function requested;
receiving a response (705, 809) to the request (709, 809) for data analytics from the receiving network function, wherein the response (705, 809) to the request (709, 809) for data analytics from the network function for providing network analytics comprises the data analytics about the further network function or a rejection;
wherein the request (709, 809) is for data analytics information is an inquiry for data analytics information and the response (705, 809) is a reply or the request (709, 809) is a subscription for data analytics information and the response (705, 809) comprises one or more notifications;
wherein: transmitting the request (709, 809) further comprises transmitting the request (709, 809) through a first network to the network function for providing network analytics in a second network; wherein the first network and the second network are different networks;
wherein receiving the response further comprises receiving the response through a first network from the network function for providing network analytics in a second network; wherein the first network and the second network are different networks.

14. A method for providing network analytics comprising:
receiving a request (709, 809) for data analytics from a data analytics information from a network function requesting network function wherein the request (709, 809) for data analytics information comprises the identification of a further network function and an indicator of the data analytics about the further network function requested;
storing data analytics related at least to the further network function;
processing data analytics related to at least the further network function retrieved from the store;
transmitting a response (705, 809) to the request (709, 809) for data analytics from the data analytics information from a network function to the data analytics information from a network function, wherein the response (705, 809) to the request (709, 809) for data analytics comprises the data analytics about the further network function retrieve by the processor or a rejection;
wherein the request (709, 809) is for data analytics information is an inquiry for data analytics information and the response (705, 809) is a reply or the request (709, 809) is a subscription for data analytics information and the response (705, 809) comprises one or more notifications;
wherein: transmitting the response (705, 809) further comprises transmitting the response (705, 809) through a first network to the network function for providing network analytics in a second network; wherein the first network and the second network are different networks;
wherein receiving the response further comprises receiving the response through a first network from the network function for providing network analytics in a second network; wherein the first network and the second network are different networks.
